# EUROPEAN PATENT APPLICATION

(11) **EP 2 778 265 A1**
(43) Date of publication of application: **17.09.2014**
(21) Application number: 13158561.4
(22) Date of filing: 11.03.2013
(51) Int. Cl.: D01D 5/42, D01F 8/06, B32B 27/08, B32B 27/32

(54) **Multilayer fibers**

(71) Applicant: Basell Polyolefine GmbH, 50389 Wesseling (DE)
(72) Inventor: Perdomi, Gianni, 44124 Ferrara (IT); Müller, Johannes-Gerhard, 97274 Leinach (DE); Rastogi, Ankur, 65929 Frankfurt (DE)
(74) Representative: Sacco, Marco

(57) **Abstract**

A multilayer fiber ABA comprising:
A) at least two top layers (layer A) comprising
propylene copolymer with ethylene having an ethylene derived units content ranging from 3.5 wt% to 6.5 wt%; a melt flow rate according to ISO 1133 (230°C, 2.16 Kg) comprised between from 0.5 g/10 min to 5 g/10 min; a fraction of polymer soluble in xylene at 25°C ranging from 10 wt% to 17wt% based on the total weight of said copolymer:
B) at least one core layer (layer B) comprising a high density polyethylene having a density ranging from 0.942 g/cm³ to 0.958 g/cm³; and having a melt flow rate (MFR measured at 190°C 5.0 kg) ranging from 0.3 g/10 min to 5 g/10 min.

## Description

The present invention relates to a fiber obtained by multilayer film ribbons said film comprises at least a high density polyethylene (HDPE) as the core layer and a propylene copolymer as the skin layers.

Multilayer films are well known in the art for example EP 808247 discloses a stretchable multilayer film in which at least one layer (A) comprises a linear low density polyethylene and at least one layer (B) comprises a heterophasic polyolefin composition, EP 809573 discloses a multilayer film in which at least one layer comprises a linear copolymer of ethylene with alpha-olefin and at least one layer comprises a copolymer of propylene. However this application is silent about the possibility to form ribbon that when stretched can form fibers. Thus it would be desirable to have a multilayer fibers obtained by stretching ribbons of an ABA film comprising having improved tensile strength at various stretching ratios,

Thus an object of the present invention therefore is a multilayer fiber ABA comprising:
A) at least two skin layers (layer A) comprising copolymer of propylene and ethylene having an ethylene derived units content ranging from 3.5 wt% to 6.5 wt%; preferably from 4.0 wt% to 6.5 wt%; more preferably from 4.5 wt% to 6.0 wt%; even more preferably from 4.6 wt% to 5.4 wt%; a melt flow rate according to ISO 1133 (230°C, 2.16 Kg) comprised between from 0.5 g/10 min to 5 g/10 min; preferably from 1.5 g/10 min to 4 g/10 min; more preferably from 2.0 g/10 min to 3.0 g/10 min and a fraction of polymer soluble in xylene at 25°C ranging from 10 **wt%** to **17wt%** based on the total weight of said copolymer:
B) at least one core layer (layer B) comprising a high density polyethylene having a density ranging from 0.942 g/cm³ to 0.959 g/cm³ more preferably from 0.945 g/cm³ to 0.952 g/cm³; and having a melt flow rate (MFR measured at 190°C 2.16 kg) ranging from 0.3 g/10 min to 5 g/10 min; preferably ranging from 1.0 g/10 min to 3.0 g/10 min; more preferably ranging from 1.2 g/10 min to 2.2 g/10 min.

The propylene copolymer A) can optionally contain from 0 to 5wt% of a C4-C10 alpha olefins, such as 1-butene, 1-hexene and 1-octene. The propylene copolymer A) preferably has a tensile modulus is in the range of from 500 to 900 MPa; preferably from 600 to 800 MPa ; more preferably from 650 to 780 MPa. The polymers A and B to be used in the preparation of the film of the present invention can be prepared by polymerizing the monomers either in the liquid or gas-phase polymerization reactor.

For component A the polymerization is carried out in presence of a highly stereospecific heterogeneous Ziegler-Natta catalyst. The Ziegler-Natta catalysts suitable for producing the propylene polymer compositions of the invention comprise a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound.

Suitable catalysts systems are described in the European patents EP45977, EP361494, EP728769, EP 1272533 and in the international patent application WO00/63261.

Preferably, the solid catalyst component comprises Mg, Ti, halogen and an electron donor selected from esters of phthalic acids disclosed in EP45977 and in particular of either diisobutylphathalate or dihexylphthalate or diethylphthalate and mixtures thereof.

According to a preferred method, the solid catalyst component can be prepared by reacting a titanium compound of formula Ti(OR)_{n-y}X_{y}, where n is the valence of titanium and y is a number between 1 and n, preferably TiCl₄ with a magnesium chloride deriving from an adduct of formula MgCl₂●pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130 °C). Then, the emulsion is quickly quenched, thereby causing the solidification of the adduct in form of spherical particles. Examples of spherical adducts prepared according to this procedure are described in US 4,399,054 and US 4,469,648. The so obtained adduct can be directly reacted with the Ti compound or it can be previously subjected to thermal controlled dealcoholation (80-130 °C) so as to obtain an adduct in which the number of moles of alcohol is generally lower than 3, preferably between 0.1 and 2.5. The reaction with the Ti compound can be carried out by suspending the adduct (dealcoholated or as such) in cold TiCl₄ (generally 0 °C); the mixture is heated up to 80-130 °C and kept at this temperature for 0.5-2 hours. The treatment with TiCl₄ can be carried out one or more times. The internal donor can be added during the treatment with TiCl₄ and the treatment with the electron donor compound can be repeated one or more times. Generally, the succinate of formula (I) is used in molar ratio with respect to the MgCl₂ of from 0.01 to 1 preferably from 0.05 to 0.5. The preparation of catalyst components in spherical form is described for example in European patent application EP-A-395083 and in the International patent application WO98/44001. The solid catalyst components obtained according to the above method show a surface area (by B.E.T. method) generally between 20 and 500 m²/g and preferably between 50 and 400 m²/g, and a total porosity (by B.E.T. method) higher than 0.2 cm³/g preferably between 0.2 and 0.6 cm³/g. The porosity (Hg method) due to pores with radius up to 10.0001Å generally ranges from 0.3 to 1.5 cm³/g, preferably from 0.45 to 1 cm³/g.

The organo-aluminum compound is preferably an alkyl-Al selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as AlEt₂Cl and Al₂Et₃Cl₃.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula Rₐ⁵R_{b}⁶Si(OR⁷)_{c}, where a and b are integer from 0 to 2, c is an integer from 1 to 3 and the sum (a+b+c) is 4; R⁵, R⁶, and R⁷, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1,trifluoropropyl-2-ethylpiperidinyl-dimethoxysilane and 1,1,1,trifluoropropyl-metildimethoxysilane. The external electron donor compound is used in such an amount to give a molar ratio between the organo-aluminum compound and said electron donor compound of from 0.1 to 500.

HDPE component B) can be prepared with processes commonly known in the art.

Skin layer A) can optionally contain in addition to the propylene/ethylene copolymer up to 15 5 wt% of linear low density polyethylene (LLDPE) having a density ranging from 0.880 g/cm³ to 0.942 g/cm³ and a (MFR measured at 190°C 2.16 kg) ranging from 0.1 g/10 min to 10 g/10 min.

The multilayer fibers of the present invention have the advantage that the properties of the HDPE are fully retained in the final fiber with the addition of the properties of the propylene/ethylene copolymer without the problem of delamination of the fiber during the stretching. Furthermore the tensile strength at various stretching ratios is improved.

The stretching ratio typically ranges from 2:1 to 10:1, preferably from 5:1 to 9:1; even more preferably from 7:1 to 9:1,

Both component A) and component B) may further comprise additives commonly employed in the polyolefin field, such as antioxidants, light stabilizers, nucleating agents, antiacids,lubricants, antistatics, slip agents"processing aids additives, colorants and fillers.

The following examples are given to illustrate and not to limit the present invention

### Examples

### Ethylene content of the polymers (C2 content)

### Ethylene content has been determined by IR spectroscopy.

The spectrum of a pressed film of the polymer is recorded in absorbance vs. wavenumbers (cm⁻¹). The following measurements are used to calculate C2 content:
a) Area (At) of the combination absorption bands between 4482 and 3950 cm⁻¹ which is used for spectrometric normalization of film thickness.
b) Area (**A_{c2}**) of the absorption band due to methylenic sequences (CH₂ rocking vibration) after a proper digital subtraction of an isotactic polypropylene (IPP) reference spectrum. The range 660 to 790 cm⁻¹.

### Melt flow rate (MFR)

ISO 1133 (230°C, 2.16 Kg)

### Density

ISO 1183

### Xylene soluble and insoluble fractions at 25°C (room temperature)

2.5 g of polymer and 250 cm3 of xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then kept for 30 minutes in a ermostatic water bath at 25 °C for 30 minutes. The so formed solid is filtered on quick filtering paper. 100 cm3 of the filtered liquid is poured in a previously weighed aluminum container which is heated on a heating plate under nitrogen flow, to remove the solvent by evaporation. The container is then kept in an oven at 80 °C under vacuum until constant weight is obtained. The weight percentage of polymer soluble in xylene at room temperature is then calculated. The percent by weight of polymer insoluble in xylene at room temperature is considered the Isotacticity Index of the polymer. This value corresponds substantially to the Isotacticity Index determined by extraction with boiling n-heptane, which by definition constitutes the Isotacticity Index of polypropylene.

### Itrinsic Viscosity (I.V.)

### Determined in tetrahydronaphthalene at 135 °C.

Component A is a propylene/ethylene copolymer sold by LyondellBasell under the tradename Clyrell RC 124H having an ethylene content of 5.1 wt%, MFR (230°C/2.16 kg) of 2.2 g/10min, fraction of polymer soluble in xylene at 25°C of 12 wt%.

Component B is an HDPE sold by LyondellBasell under the trade name HOSTALEN ACP 7740 F2 having a MFR (190°C / 5kg) of 1,8 g/10min and density of 0,948 g/cm³. Component C is a propylene/ethylene copolymer sold by LyondellBasell under the tradename Moplen RP 210 G having an ethylene content of 3.1 wt%, MFR (230°C/2.16 kg) of 1,8 g/10min;

### Films productions

A film roll with single layer film were produced on a small laboratory 3-layer Collin blown film line with the blow up ratio of 2.5:1 and approximately 70 µm film thickness. In the sample (ABA structure) the core layer (appr. 60% of the film thickness) was made of *Hostalen* ACP 7740 F2 whereas the two outer layers (each appr. 20%) were made of Clyrell RC 124 H in example 1 and Moplen RP 210 G in comparative example 2 (CBC structure).

The films were trimmed and stretched on hot-plate ISO stretching unit at several stretching ratio and the tensile strength has been measured. They are tested according to the tensile test of film samples:
DIN EN ISO 527-1 (general information about tensile test)
DIN EN ISO 527-3 (information about film samples)
(clamping length: 200mm; testing speed: 100 mm/min)

The samples are conditioned according to:
DIN EN ISO 291
(temp.: 23°C ± 2°C and humidity: 50 % ± 10)

Procedure to check the titer of the tapes:
ISO 4591

The results are reported on table 2

**Table 2**

| Stretching ratio - property | | Ref | Ex 1 (ABA) | Comp Ex 2(CBC) |
|---|---|---|---|---|
| 6:1 Titre | tex | 60.3 | 56.2 | 63.6 |
| 6:1 Breaking force | N | 21.1 | 19.9 | 22.3 |
| 6:1 Tensile strength | mN/tex | 349.2 | 354 | 350.7 |
| 6:1 elongation at break | % | 72.9 | 65.8 | 65.3 |
| 7:1 Titre | tex | 51.9 | 47.8 | 54.4 |
| 7:1 Breaking force | N | 20.5 | 20.2 | 22.1 |
| 7:1 Tensile strength | mN/tex | 394.5 | 423.4 | 406.5 |
| 7:1 elongation at break | % | 41.3 | 38.0 | 42.1 |
| 8:1 Titre | tex | 44.6 | 42.7 | 48.3 |
| 8:1 Breaking force | N | 21.3 | 20.5 | 22.9 |
| 8:1 Tensile strength | mN/tex | 478.1 | 478.8 | 474.1 |
| 8:1 elongation at break | % | 31 | 39.9 | 27.2 |
| 9:1 Titre | tex | 40 | 37.0 | 43.3 |
| 9:1 Breaking force | N | 22.4 | 22.5 | 25.4 |
| 9:1 Tensile strength | mN/tex | 559.2 | 607.0 | 586.2 |
| 9:1 elongation at break | % | 24.5 | 19.8 | 18.3 |

| | | | | |
|---|---|---|---|---|
| Example 1 according to the invention shows the higher tensile strength at all the stretching ratio | | | | |

## Claims

1. A multilayer fiber ABA comprising:
A) at least two top layers (layer A) comprising
propylene copolymer with ethylene having an ethylene derived units content ranging from 3.5 wt% to 6.5 wt%; a melt flow rate according to ISO 1133 (230°C, 2.16 Kg) comprised between from 0.5 g/10 min to 5 g/10 min; a fraction of polymer soluble in xylene at 25°C ranging from 10 wt% to 17wt% based on the total weight of said copolymer:
B) at least one core layer (layer B) comprising a high density polyethylene having a density ranging from 0.942 g/cm³ to 0.958 g/cm³; and having a melt flow rate (MFR measured at 190°C 5.0 kg) ranging from 0.3 g/10 min to 5 g/10 min.

2. The multilayer fiber according to claim 1 wherein the propylene copolymer with ethylene (A) has an ethylene derived units content ranging from 4.0 wt% to 6.5 wt%.

3. The multilayer fiber according to claims 1 or 2 wherein the a high density polyethylene (B) has a density ranging from 0.945 g/cm³ to 0.952 g/cm³.

4. The multilayer film according to anyone of claims 1-3 wherein the propylene copolymer with ethylene (A) has a melt flow rate according to ISO 1133 (230°C, 2.16 Kg) comprised between from 1.5 g/10 min to 4 g/10 min.

5. The multilayer film according to anyone of claims 1-4 wherein the a high density polyethylene (B) has a melt flow rate (MFR measured at 190°C 5.0 kg) ranging from 1.0 g/10 min to 3.0 g/10 min.

6. The multilayer film according to anyone of claims 1-5 wherein the propylene copolymer A) has a tensile modulus is in the range of from 500 to 900 MPa.
